# EUROPÄISCHE PATENTANMELDUNG

(11) **EP 3 115 691 A1**
(43) Veröffentlichungstag der Anmeldung: **11.01.2017**
(21) Anmeldenummer: 16177760.2
(22) Anmeldetag: 04.07.2016
(51) Int. Cl.: F23R 3/00, F23R 3/60

(54) **GASTURBINENBRENNKAMMER MIT INTEGRIERTEM TURBINENVORLEITRAD SOWIE VERFAHREN ZU DEREN HERSTELLUNG**

(30) Priorität: 06.07.2015 DE 102015212573
(71) Anmelder: Rolls-Royce Deutschland Ltd & Co KG, 15827 Blankenfelde-Mahlow (DE)
(72) Erfinder: CLEMEN, Dr.-Ing. Carsten, 15749 Mittenwalde (DE)
(74) Vertreter: Hoefer & Partner Patentanwälte mbB

(57) **Zusammenfassung**

Die Erfindung bezieht sich auf eine Gasturbinenbrennkammer mit einer äußeren Brennkammerwand 1 und einer inneren Brennkammerwand 2, wobei die äußere Brennkammerwand 1 und die innere Brennkammerwand 2 jeweils einstückig mit einer äußeren 15 bzw. einer inneren 16 ringförmigen Plattform ausgebildet sind, welche einstückig mit um den Umfang angeordneten Turbinenvorleitschaufeln 14 verbunden sind, dadurch gekennzeichnet, dass die Gasturbinenbrennkammer nur mittels einer einstückig an der äußeren Plattform 15 ausgebildeten Aufhängungsvorrichtung 18 gelagert ist, sowie ein Verfahren zu deren Herstellung.

## Beschreibung

Die Erfindung bezieht sich auf eine Gasturbinenbrennkammer gemäß den Merkmalen des Oberbegriffs des Anspruchs 1.

Im Einzelnen bezieht sich die Erfindung auf eine Gasturbinenbrennkammer mit einer äußeren Brennkammerwand und einer inneren Brennkammerwand, wobei die äußere Brennkammerwand und die innere Brennkammerwand jeweils einstückig mit einer äußeren bzw. einer inneren ringförmigen Plattform ausgebildet sind, wobei die Plattformen einstückig mit um den Umfang angeordneten Turbinenvorleitschaufeln, welche ein Turbinenvorleitrad bilden, verbunden sind.

Bei den aus dem Stand der Technik bekannten Ausgestaltungen von Ringbrennkammern für Gasturbinen sind üblicherweise die Brennkammer und das Turbinenvorleitrad in Form zweier baulich unabhängiger Komponenten ausgebildet. Dabei werden unterschiedliche Herstellungsverfahren verwendet, wobei auch unterschiedliche Werkstoffe zum Einsatz kommen können.

Der Stand der Technik zeigt Konstruktionen, bei welchen die Gasturbinenbrennkammer eine äußere und eine innere Brennkammerwand aufweisen, die aus einem Blechmaterial geformt sind und jeweils separat über Flansche aufgehängt bzw. gelagert sind. Diese Flansche sind üblicherweise als Schmiedeteile ausgebildet und mit den Brennkammerwänden verbunden. Hierbei ergibt sich ein erheblicher Herstellungsaufwand, der auch in zusätzlichem Gewicht resultiert.

Vorbekannte Brennkammern sind entweder einwandig ausgebildet oder weisen eine zusätzliche, zum Innenraum der Brennkammer weisende Schutzkonstruktion auf, welche die Hitze der Verbrennungsgase abschirmt. Diese Konstruktion umfasst beispielsweise Brennkammerschindeln, die mit der äußeren bzw. der inneren Brennkammerwand über Bolzen verschraubt sind. Weiterhin weisen die Brennkammerwände und die Schindeln zusätzlich Luftzumischlöcher auf, um die Verbrennung zu kontrollieren. Zusätzlich sind Kühllöcher vorgesehen, um sowohl die Brennkammerwände als auch die Schindeln zu kühlen. Auch hierdurch ergibt sich ein hoher fertigungstechnischer Aufwand, der ebenfalls zu zusätzlichem Gewicht führt.

Stromab der Gasturbinenbrennkammer ist üblicherweise ein Turbinenvorleitrad angeordnet. Dieses ist als separates Bauteil gefertigt und über eine Schnittstelle mit der Gasturbinenbrennkammer verbunden. Diese Schnittstelle umfasst beispielsweise eine Brennkammer- zu Turbinenvorleitraddichtung. Das Turbinenvorleitrad ist unabhängig von der Brennkammer gelagert, so dass die Notwendigkeit besteht, Maßnahmen zur Abdichtung von Leckagen zwischen der Brennkammer und dem Turbinenvorleitrad zu treffen. Die Leckagen ergeben sich u.a. auch aus der schwimmenden Lagerung der Brennkammer und des Turbinenvorleitrads relativ zueinander, wodurch sich große axiale und radiale Bewegungen ergeben können. Hierdurch verringert sich der Wirkungsgrad, wodurch sich ein erhöhter Kraftstoffverbrauch ergibt.

Aus der US 7,249,462 B2 ist eine Gasturbinenbrennkammer bekannt, bei welcher ein mit Statorschaufeln versehenes Turbinenvorleitrad einstückig am Ausströmbereich der Gasturbinenbrennkammer ausgebildet ist. Diese Gesamtkonstruktion ist sowohl am vorderen Bereich der Gasturbinenbrennkammer (bezogen auf die Durchströmungsrichtung) als auch am Übergangsbereich zur Hochdruckturbine außen und innen gelagert. Es ergibt sich eine sehr aufwendige, in der Herstellung kostenintensive und mit zusätzlichem Gewicht belastete Konstruktion.

Die WO 2014/099074 A2 und die WO 2014/099076 A2 zeigen jeweils eine Konstruktion, bei welcher die Gasturbinenbrennkammer ebenfalls einstückig mit einem Turbinenvorleitrad verbunden ist. Auch hierbei ist eine aufwendige Aufhängung sowohl radial außerhalb als auch radial innerhalb, bezogen auf die Triebwerksmittelachse, vorgesehen. Eine ähnliche Konstruktion zeigen die EP 1 775 561 A2 sowie die FR 2 992 018 A1.

Der Erfindung liegt die Aufgabe zugrunde, eine Gasturbinenbrennkammer der eingangs genannten Art zu schaffen, welche bei einfachem Aufbau, einfacher Herstellbarkeit, geringen Kosten und hoher Funktionalität die Nachteile des Standes der Technik vermeidet.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass die Gasturbinenbrennkammer eine äußere Brennkammerwand und eine innere Brennkammer aufweist. Insgesamt ergibt sich dabei eine Ringbrennkammer, an deren Einströmbereich ein Brennkammerkopf angeordnet ist. Die äußere Brennkammerwand und die innere Brennkammerwand sind jeweils einstückig mit einer äußeren ringförmigen oder teilringförmigen Plattform bzw. einer inneren ringförmigen oder teilringförmigen Plattform ausgebildet. Zwischen der äußeren und der inneren Plattform sind Turbinenvorleitschaufeln angeordnet, welche einstückig mit den Plattformen ausgebildet sind und gleichmäßig um den Umfang verteilt sind, um ein Turbinenvorleitrad zu bilden.

Bei der erfindungsgemäßen einstückigen Ausgestaltung ist es erforderlich, dass der Brennkammerkopf, welcher gemäß den Konstruktionen des Standes der Technik ausgebildet sein kann, mit den Brennkammerwänden lösbar verbunden ist, um eine Zugänglichkeit in die Brennkammer zu gewährleisten. Diese Zugänglichkeit wird beispielsweise zum Austausch von Hitzeschildern oder ähnlichem benötigt.

Erfindungsgemäß ist vorgesehen, dass die Gasturbinenbrennkammer ausschließlich mittels einer an der äußeren Plattform des Turbinenvorleitrads ausgebildeten Aufhängungsvorrichtung gelagert ist. Diese Aufhängungsvorrichtung kann beispielsweise in Form eines einstückig mit der äußeren Plattform ausgebildeten Ringflansches oder in Form von einzelnen Streben ausgebildet sein.

Erfindungsgemäß ergibt sich somit eine einstückige Konstruktion, welche erfindungsgemäß hinsichtlich des Herstellungsverfahrens durch ein additives Verfahren einstückig gefertigt ist. Die einstückige Fertigung kann erfindungsgemäß so ausgestaltet sein, dass die Gasturbinenbrennkammer als Vollring ausgebildet ist. Es können jedoch auch einzelne Segmente in einstückiger Herstellungsweise gefertigt werden, die dann zu einem Vollring gefügt werden, beispielsweise durch Verschweißen oder Verschrauben.

Erfindungsgemäß ist es möglich, sowohl die äußere Brennkammerwand als auch die innere Brennkammerwand einwandig auszubilden. Es ist jedoch auch möglich, diese jeweils doppelwandig auszubilden und beispielsweise zur Hitzeabschirmung mit Hitzeschildern oder Schindeln zu versehen. Auch diese Schindeln werden bei der erfindungsgemäßen Ausgestaltung der Brennkammerwand und bei dem zugrundeliegenden erfindungsgemäßen Verfahren einstückig mittels eines additiven Verfahrens zusammen mit der Brennkammerwand hergestellt werden.

Die erfindungsgemäße Konstruktion führt zu einer erheblichen Gewichtseinsparung, da an der Brennkammer selbst keine Aufhängungen vorgesehen sind, sondern die gesamte Gasturbinenbrennkammer zusammen mit dem Turbinenvorleitrad ausschließlich mittels der äußeren Plattform des Turbinenvorleitrads gelagert ist. Es entfallen erfindungsgemäß auch Dichtungen oder ähnliches zwischen der Brennkammer und einem separat hergestellten Turbinenvorleitrad. Somit verringert sich zusätzlich zu den geringeren Herstellungskosten und dem geringeren Gewicht auch die auftretende Leckage zwischen der Brennkammer und dem Turbinenvorleitrad. Dies führt zu geringeren NOx-Emissionen und geringerem Treibstoffverbrauch.

Die erfindungsgemäße additive Herstellung der Gasturbinenbrennkammer resultiert auch in einer optimierten Anordnung und Ausgestaltung sämtlicher Kühlluftlöcher, incl. der Kühlung der äußeren und inneren Plattform des Turbinenvorleitrads. Auch dies führt zu einer Steigerung der Effizienz der Gasturbinenbrennkammer.

Durch die erfindungsgemäß vorgesehene Herstellung der gesamten Gasturbinenbrennkammer einschl. des Turbinenvorleitrads ergeben sich Vorteile bei der additiven Ausgestaltung, da nur noch ein Bauteil mit einer Technologie gefertigt werden muss. Die erfindungsgemäße Gasturbinenbrennkammer kann beispielsweise aus CM247, CM247LC, MarM002 oder Hastelloy X hergestellt werden. Dabei kann das additive Verfahren ein DLD-Verfahren (Direct Laser Depositioning) oder ein DLMS-Verfahren (Direct Metal Laser Sintering) sein.

Im Folgenden wird die Erfindung anhand eines Ausführungsbeispiels in Verbindung mit der Zeichnung beschrieben. Dabei zeigt:
- Fig. 1: ein Gasturbinentriebwerk zur Verwendung der erfindungsgemäßen Gasturbinenbrennkammer,
- Fig. 2: eine vereinfachte Seitenansicht einer erfindungsgemäßen Brennkammer gemäß dem Stand der Technik,
- Fig. 3: eine Ansicht, analog Fig. 2, eines Ausführungsbeispiels einer erfindungsgemäßen Gasturbinenbrennkammer,
- Fig. 4: eine Ansicht, analog Fig. 3, eines weiteren Ausführungsbeispiels in einwandiger Ausgestaltung, und
- Fig. 5, 6: vereinfachte Ansichten von Segmenten der erfindungsgemäßen Gasturbinenbrennkammer in weiteren Ausführungsbeispielen.

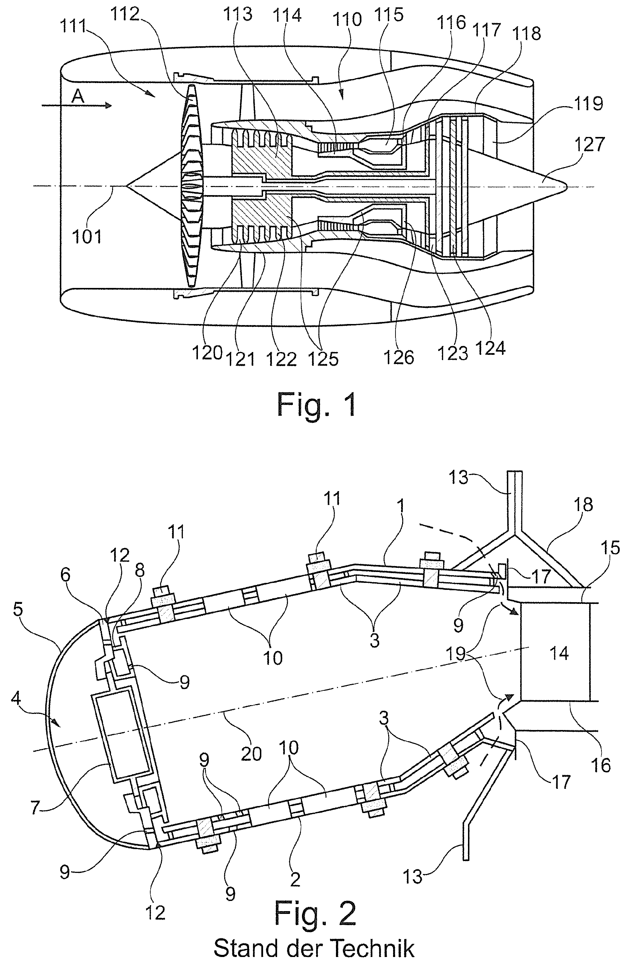

Das Gasturbinentriebwerk 110 gemäß Fig. 1 ist ein allgemein dargestelltes Beispiel einer Turbomaschine, bei der die Erfindung Anwendung finden kann. Das Triebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 101 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Kerntriebwerksgehäuse 121 in einen ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 bzw. der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotornabe 126 und die darauf angeordneten Turbinenlaufschaufeln 124 drehen sich im Betrieb um die Triebwerksmittelachse 101.

Die Fig. 2 zeigt einen Aufbau einer Gasturbinenbrennkammer gemäß dem Stand der Technik. Die Gasturbinenbrennkammer umfasst eine äußere Brennkammerwand 1 sowie eine innere Brennkammerwand 2, welche jeweils doppelwandig ausgebildet sind und an ihrer dem Brennraum zugewandten Seite Brennkammerschindeln 3 oder eine zweite, parallele Brennkammerwand umfassen. Am Anströmbereich ist ein Brennkammerkopf 4 angeordnet, der eine Brennkammerkopfschale 5 sowie eine Kopfplatte 6 umfasst. Zentrisch ist jeweils eine Brennerdichtung 7 angeordnet, welche mit einem Eingriffsloch für eine Treibstoffdüse versehen ist. Weiterhin umfasst der Brennkammerkopf 4 ein Hitzeschild 8, welches mit Kühlluftlöchern 9 versehen ist. Der Brennkammerkopf 4 ist mittels Schweißnähten 12 mit der äußeren Brennkammerwand 1 bzw. der inneren Brennkammerwand 2 fest verbunden.

Die äußere und die innere Brennkammerwand 1, 2 sind mit Zumischlöchern 10 zur Zuführung von Mischluft sowie mit Kühlluftlöchern 9 versehen. Die Befestigung der Brennkammerschindeln 3 erfolgt mittels Bolzen 11, so wie dies aus dem Stand der Technik bekannt ist.

Die bekannte Gasturbinenbrennkammer wird mittels einer äußeren und einer inneren Brennkammeraufhängung 13 gelagert.

Am Ausströmbereich der Gasturbinenbrennkammer sind Turbinenvorleitschaufeln 14 eines Turbinenvorleitrades angeordnet. Die Turbinenvorleitschaufeln 14 sind jeweils mit einer äußeren Plattform 15 bzw. einer inneren Plattform 16 verbunden und werden mittels einer Aufhängungsvorrichtung 18 gelagert. Zwischen dem Turbinenvorleitrad mit den Turbinenvorleitschaufeln 14 ist eine Dichtung 17 vorgesehen, um eine Abdichtung zwischen der Brennkammer und dem Turbinenvorleitrad zu gewährleisten. In diesem Bereich ist weiterhin eine Vorleitrad-Plattformkühlung 19 vorgesehen, um zusätzliche Kühlluft zuzuführen. Die Schnittstelle zwischen der Brennkammer und dem Turbinenvorleitrad erfordert auch einen erhöhten Kühlluftbedarf, da die Möglichkeiten zu einer effektiven Kühlung der Vorleitradplattformen erheblich eingeschränkt sind. Diese zusätzliche Kühlluft steht nicht mehr zur Zumischung in die Brennkammer durch die Zumischlöcher 10 zur Verfügung und wirkt sich negativ auf die NOx-Emissionen aus.

Insgesamt ergibt sich bei der beschriebenen Konstruktion des Standes der Technik ein hoher Fertigungsaufwand, der auch durch die Vielzahl der verwendeten Teile bedingt ist. Dies führt zu einem erheblichen Gesamtgewicht. Weiterhin ist die Abdichtung zwischen der Brennkammer und dem Turbinenvorleitrad kritisch und erfordert zusätzliche Maßnahmen.

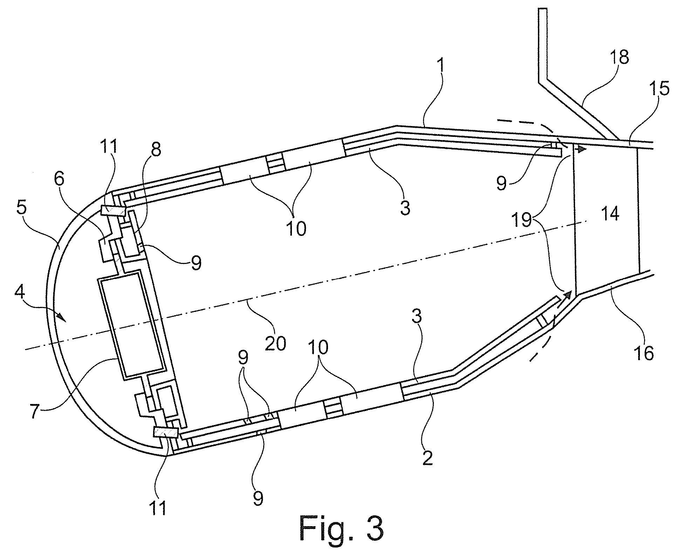

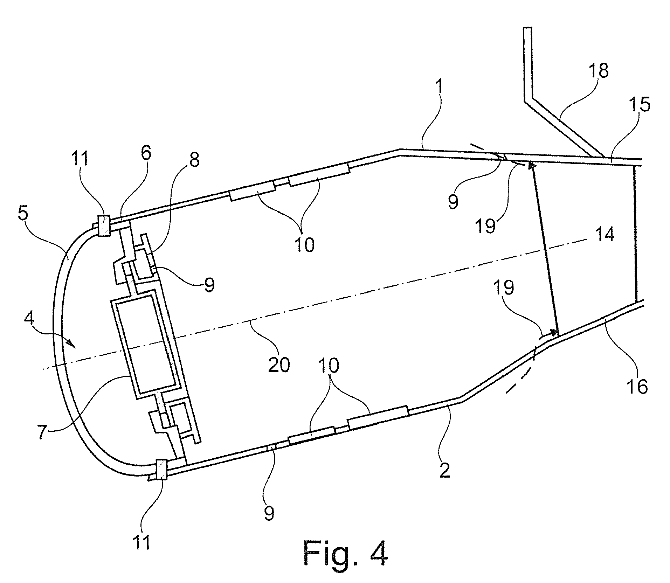

Die Fig. 3 und 4 zeigen ein erstes und ein zweites Ausführungsbeispiel der Erfindung.

Bei dem ersten Ausführungsbeispiel der Fig. 3 ist eine Gasturbinenbrennkammer in analogem Aufbau zu dem in Verbindung mit Fig. 2 beschriebenen Stand der Technik gezeigt. Gleiche Teile sind mit gleichen Bezugsziffern versehen, so dass auf eine nochmalige Beschreibung verzichtet werden kann.

Bei dem in Fig. 3 gezeigten Ausführungsbeispiel ist die äußere Brennkammerwand 1 einstückig mit einer ringförmigen äußeren Plattform 15 ausgebildet, während die innere Brennkammerwand 2 einstückig mit der inneren Plattform 16 ausgebildet ist. Die Angaben "äußere" und "innere" beziehen sich jeweils auf die Triebwerksmittelachse 101, s. Fig. 1. Einstückig mit der äußeren Plattform 15 und der inneren Plattform 16 sind Turbinenvorleitschaufeln 14 ausgebildet, welche gleichmäßig um den Umfang der Gasturbinenbrennkammer verteilt sind.

Erfindungsgemäß ist vorgesehen, dass die Aufhängung der gesamten Brennkammer zusammen mit dem durch die Turbinenvorleitschaufeln 14 und die Plattformen 15 und 16 gebildeten Turbinenvorleitrad ausschließlich mittels einer einzigen Aufhängungsvorrichtung 18 an der radial äußeren Seite erfolgt. Die erfindungsgemäße Brennkammer selbst ist somit nicht zusätzlich gelagert. Dies führt zu einer erheblichen Reduzierung der erforderlichen Bauteile und zu einer drastischen Reduzierung des Gesamtgewichts. Durch die erfindungsgemäß vorgesehene additive Fertigung ist es weiterhin möglich, die Kühlluftlöcher 9 und die Zumischlöcher 10 zusammen mit den Brennkammerschindeln 3 einstückig herzustellen und hinsichtlich der Geometrie und der Anordnung zu optimieren.

Bei der erfindungsgemäßen Ausgestaltung ist es nicht erforderlich, zusätzliche Maßnahmen zur Abdichtung zwischen der Brennkammer und dem Turbinenvorleitrad vorzusehen.

Der Brennkammerkopf 4 ist erfindungsgemäß mit der äußeren Brennkammerwand 1 und der inneren Brennkammerwand 2 verschraubt oder in anderer Weise lösbar verbunden, um einen Zugang zu dem Innenraum der Brennkammer zu ermöglichen.

Die Fig. 4 zeigt ein Ausführungsbeispiel in analoger Ausbildung zu dem Ausführungsbeispiel der Fig. 3, so dass auf eine nochmalige Beschreibung der Bauteile verzichtet werden kann. Das Ausführungsbeispiel der Fig. 4 ist einwandig ausgebildet und umfasst somit lediglich eine äußere Brennkammerwand 1 sowie eine innere Brennkammerwand 2, die jeweils einstückig mit der äußeren Plattform 15 und der inneren Plattform 16 verbunden sind. Auch bei diesem Ausführungsbeispiel erfolgt die gesamte Aufhängung und Lagerung der Gesamtanordnung aus Gasturbinenbrennkammer und Turbinenvorleitrad ausschließlich durch die radial außerhalb angeordnete Aufhängungsvorrichtung 18, welche einstückig mit der äußeren Plattform 15 verbunden ist.

Die Fig. 3 und 4 zeigen jeweils Bolzen 11, mit denen der Brennkammerkopf 4 lösbar befestigt ist. Das Bezugszeichen 20 bezeichnet die Brennkammermittelsachse.

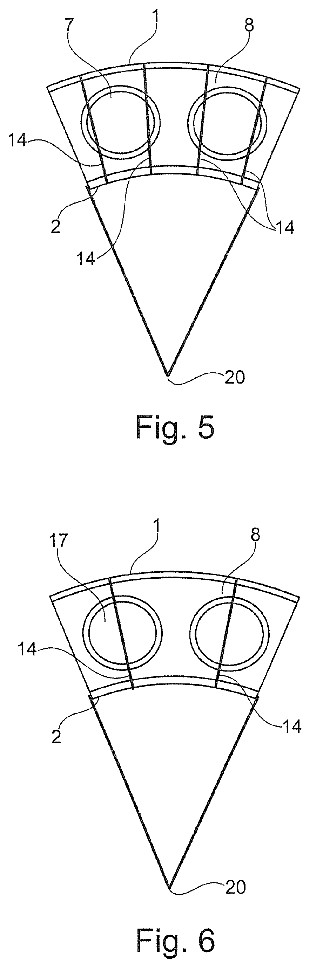

Erfindungsgemäß ist es möglich, die Gasturbinenbrennkammer zusammen mit dem Turbinenvorleitrad einstückig als Ring auszubilden. Durch das erfindungsgemäß vorgesehene additive Herstellungsverfahren, welches ein DLD- oder ein DLMS-Verfahren sein kann, wird eine derartige einstückige Ausgestaltung und Herstellung ermöglicht. Alternativ hierzu ist es auch möglich, die erfindungsgemäße Gasturbinenbrennkammer zusammen mit dem Turbinenvorleitrad in Form von Segmenten auszubilden. Beispiele derartiger Segmente zeigen die Fig. 5 und 6. Die Segmente können sich beispielsweise über einen Umfangswinkel, bezogen auf die Brennkammermittelachse 20, von 45° erstrecken. Die Ausführungsbeispiele unterscheiden sich hinsichtlich der Anzahl der Turbinenvorleitschaufeln 14. Diese sind hinsichtlich ihrer Zahl immer ein ganzzahliges Vielfaches der Anzahl der Treibstoffdüsen, deren Lage sich durch die Eingriffsfläche der Brennerdichtungen 7 ergibt. Die einzelnen in den Fig. 5 bzw. 6 gezeigten Segmente können erfindungsgemäß miteinander verschweißt oder verschraubt werden, um einen Vollring und damit die gesamte Gasturbinenbrennkammer zu bilden. Die Zahl der Segmente ist beliebig, jedes Segment kann beispielsweise eine Treibstoffdüse oder zwei Treibstoffdüsen umfassen.

### Bezugszeichenliste:

- 1: äußere Brennkammerwand
- 2: innere Brennkammerwand
- 3: Brennkammerschindel
- 4: Brennkammerkopf
- 5: Brennkammerkopfschale
- 6: Kopfplatte
- 7: Brennerdichtung mit Eingriffsloch einer Treibstoffdüse
- 8: Hitzeschild
- 9: Kühlluftloch
- 10: Zumischloch
- 11: Bolzen
- 12: Schweißnaht
- 13: Brennkammeraufhängung
- 14: Turbinenvorleitschaufel
- 15: äußere Plattform
- 16: innere Plattform
- 17: Brennkammer- zu Turbinenvorleitraddichtung
- 18: Aufhängungsvorrichtung
- 19: Plattformkühlung

- 101: Triebwerksmittelachse
- 110: Gasturbinentriebwerk / Kerntriebwerk
- 111: Lufteinlass
- 112: Fan
- 113: Mitteldruckkompressor (Verdichter)
- 114: Hochdruckkompressor
- 115: Brennkammer
- 116: Hochdruckturbine
- 117: Mitteldruckturbine
- 118: Niederdruckturbine
- 119: Abgasdüse
- 120: Leitschaufeln
- 121: Kerntriebwerksgehäuse
- 122: Kompressorlaufschaufeln
- 123: Leitschaufeln
- 124: Turbinenschaufeln
- 125: Kompressortrommel oder -Scheibe
- 126: Turbinenrotornabe
- 127: Auslasskonus

## Patentansprüche

1. Gasturbinenbrennkammer mit einer äußeren Brennkammerwand (1) und einer inneren Brennkammerwand (2), wobei die äußere Brennkammerwand (1) und die innere Brennkammerwand (2) jeweils einstückig mit einer äußeren (15) bzw. einer inneren (16) ringförmigen Plattform ausgebildet sind, welche einstückig mit um den Umfang angeordneten Turbinenvorleitschaufeln (14) verbunden sind, **dadurch gekennzeichnet, dass** die Gasturbinenbrennkammer nur mittels einer einstückig an der äußeren Plattform (15) ausgebildeten Aufhängungsvorrichtung (18) gelagert ist.

2. Gasturbinenbrennkammer nach Anspruch 1, **dadurch gekennzeichnet, dass** die äußere Brennkammerwand (1) und die innere Brennkammerwand (2) einwandig ausgebildet sind.

3. Gasturbinenbrennkammer nach Anspruch 1, **dadurch gekennzeichnet, dass** die äußere Brennkammerwand (1) und die innere Brennkammerwand (2) doppelwandig ausgebildet sind.

4. Gasturbinenbrennkammer nach einem der Ansprüche 1 bis 3, **dadurch gekennzeichnet, dass** ein Brennkammerkopf (4) lösbar mit der äußeren Brennkammerwand (1) und der inneren Brennkammerwand (2) verschraubt ist.

5. Gasturbinenbrennkammer nach einem der Ansprüche 1 bis 4, **dadurch gekennzeichnet, dass** diese als Vollring ausgebildet ist.

6. Gasturbinenbrennkammer nach einem der Ansprüche 1 bis 4, **dadurch gekennzeichnet, dass** diese aus einzelnen Segmenten ausgebildet ist.

7. Gasturbinenbrennkammer nach einem der Ansprüche 1 bis 6, **dadurch gekennzeichnet, dass** die Zahl der Turbinenvorleitschaufeln (14) ein ganzzahliges Vielfaches der Zahl der Treibstoffdüsen ist.

8. Gasturbinenbrennkammer nach einem der Ansprüche 1 bis 7, **dadurch gekennzeichnet, dass** diese aus CM247, CM247LC, MarM002 oder Hastelloy X gefertigt ist.

9. Verfahren zur Herstellung einer Gasturbinenbrennkammer nach einem der Ansprüche 1 bis 8, bei welchem die Gasturbinenbrennkammer mittels eines additiven Verfahrens hergestellt wird.

10. Verfahren nach Anspruch 9, **dadurch gekennzeichnet, dass** das additive Verfahren ein DLD-Verfahren oder DLMS-Verfahren.
